# EUROPÄISCHE PATENTSCHRIFT

(11) **EP 3 070 383 B1**
(45) Veröffentlichungstag und Bekanntmachung des Hinweises auf die Patenterteilung: **25.07.2018**
(21) Anmeldenummer: 16161087.8
(22) Anmeldetag: 18.03.2016
(51) Int. Cl.: F16K 31/40

(54) **SERVOVENTIL**
SERVO VALVE
SERVO-SOUPAPE

(30) Priorität: 20.03.2015 DE 102015104258
(43) Veröffentlichungstag der Anmeldung: 21.09.2016
(73) Patentinhaber: A. u. K. Müller GmbH & Co. KG, 40595 Düsseldorf (DE)
(72) Erfinder:
(74) Vertreter: Feder Walter Ebert

(56) Entgegenhaltungen:
- EP-A1- 2 527 700
- EP-A1- 2 557 242
- DE-A1- 3 933 747
- DE-A1-102005 011 951
- FR-A1- 2 752 606
- US-A- 5 645 264

## Beschreibung

Die vorliegende Erfindung betrifft ein Ventil, insbesondere ein Servoventil, zum Schalten eines Mediums mit einem zwischen einem Ventileinlass und einem Ventilauslass angeordneten Hauptventilsitz und einem durch Betätigung eines Vorsteuerventils zwischen einer Schließstellung und einer Offenstellung hin und her bewegbar angeordneten Schließelement, welches beim Öffnen des Vorsteuerventils von dem Hauptventilsitz abhebt und dabei Medium über das geöffnete Vorsteuerventil verdrängt. Einen weiteren Gegenstand der Erfindung bildet ein Verfahren zum Schalten eines Mediums mittels eines Ventils, insbesondere eines Servoventils, mit einem zwischen einem Ventileinlass und einem Ventilauslass angeordneten Hauptventilsitz und einem durch Betätigung eines Vorsteuerventils zwischen einer Schließstellung und einer Offenstellung hin und her bewegbar angeordneten Schließelement, welches beim Öffnen des Vorsteuerventils von dem Hauptventilsitz abhebt und dabei Medium über das geöffnete Vorsteuerventil verdrängt.

Derartige Ventile werden in vielen Bereichen der Technik, beispielsweise in sanitären Einrichtungen wie Sanitärarmaturen oder ähnlichen Vorrichtungen zum Schalten von Fluidströmen und insbesondere von Wasserströmen eingesetzt. Zum Schalten des Fluidstroms ist zwischen dem Ventileinlass und dem Ventilauslass ein Hauptventilsitz vorgesehen, der über ein zwischen einer Schließstellung und einer Offenstellung hin und her bewegbar angeordnetes Schließelement geöffnet oder geschlossen werden kann.

Um das Ventil mit geringem Energiebedarf schalten zu können, erfolgt die Betätigung des Schließelements über ein deutlich kleineres Vorsteuerventil. Dabei wird zum Bewegen des Schließelements der Druck des in dem Ventil strömenden Fluids ausgenutzt, weshalb diese Ventile auch als eigenmediumbetätigte Ventile bezeichnet werden.

Bei solchen eigenmediumbetätigten Ventilen wird der am Ventileinlass anliegende Druck in einen oberhalb des Schließelements angeordneten Steuerraum geführt, wodurch das Schließelement in dessen Schließstellung auf den Hauptventilsitz gedrückt wird. Durch Betätigung des im Querschnitt wesentlich kleineren Vorsteuerventils können die Druckverhältnisse innerhalb des Ventils derart geändert werden, dass der Druck innerhalb des Steuerraums abfällt und sich das Ventil infolge der veränderten Druckverhältnisse öffnet. Denn sobald der Druck innerhalb des Steuerraums abgefallen ist, wird das Schließelement durch den von der anderen Seite her anliegenden Druck des an dem Ventileinlass anliegenden Mediums von dem Hauptventilsitz abgehoben, so dass der Strömungsweg zwischen Ventileinlass und Ventilauslass offen ist. Beim Abheben des Schließelements von dem Hauptventilsitz wird dabei das in dem Steuerraum befindliche Medium über das geöffnete Vorsteuerventil verdrängt und in Richtung des Ventilauslasses befördert.

Sobald das Vorsteuerventil erneut betätigt wird, ändern sich die Druckverhältnisse dahingehend, dass sich innerhalb des über dem Schließelement angeordneten Steuerraums erneut ein Druck aufbaut, welcher dazu führt, dass sich das Schließelement wieder von oben her an den Hauptventilsitz anlegt und das Ventil geschlossen ist.

Derartige Ventile haben sich in der Vergangenheit zwar durchaus bewährt, bei bestimmten Anwendungen hat es sich jedoch als nachteilig erwiesen, dass auch nach mehrfacher Betätigung des Ventils gewisse Mengen des Mediums im Bereich des Vorsteuerventils über längere Zeiträume verbleiben können. Diese auch als Stagnationswasser bezeichneten Anteile des Mediums können Korrosion und Verschmutzung verursachen.

US5645264A offenbart ein Ventil gemäß Oberbegriff des Anspruchs 1.

Aufgabe der vorliegenden Erfindung ist es, ein Ventil wie auch ein Verfahren zum Schalten eines Mediums anzugeben, welche sich durch eine deutlich reduzierte Stagnationswasserbildung auszeichnen.

Diese Aufgabe wird bei einem Ventil gemäß Anspruch 1 gelöst. Das Verdrängungsvolumen des Schließelements ist größer als das Vorsteuervolumen des Vorsteuerventils. Aufgrund dieses Größenverhältnisses kann das bei geschlossenem Hauptventilsitz mit stehendem Medium gefüllte Vorsteuervolumen des Vorsteuerventils bei jedem Öffnungsvorgang des Ventils durch die Bewegung des Schließelements vollständig aus dem Vorsteuerventil verdrängt werden. Da das Verdrängungsvolumen des Schließelements größer ist als das Vorsteuervolumen des Vorsteuerventils, wird bei jedem Öffnungsvorgang des Ventils eine Menge an frischem Medium von dem Schließelement über das geöffnete Vorsteuerventil verdrängt, die ausreicht, das Vorsteuervolumen des Vorsteuerventils vollständig mit frischem Medium durchzuspülen. Die Stagnationswasserbildung wird deutlich verringert.

Eine besonders vorteilhafte Ausgestaltung sieht in diesem Zusammenhang vor, dass das Verdrängungsvolumen des Schließelements gegenüber dem Vorsteuervolumen derart dimensioniert ist, dass das Vorsteuervolumen bei jedem Öffnungsgang vollständig durchgespült wird. Durch die vollständige Durchspülung werden bei jeder Ventilbetätigung sämtliche Volumenanteile des Vorsteuervolumens vollständig durchspült. Die Bildung von Stagnationswasser wird weiter gesenkt.

In diesem Zusammenhang ist es ferner von Vorteil, wenn das Verdrängungsvolumen des Schließelements um mehr als einen Faktor 2, vorteilhafter mehr als einen Faktor 5 und noch vorteilhafter mehr als einen Faktor 10, größer als das Vorsteuervolumen des Vorsteuerventils ist. Auch hierdurch ergibt sich eine reduzierte Stagnationswasserbildung. Das Verdrängungsvolumen wird von einem in der Schließstellung des Schließelements mit Medium gefüllten, vorsteuerventilseitig angeordneten Steuerraum umschlossen. Der Steuerraum kann beim Öffnen des Hauptventilsitzes über das in diesem Zustand geöffnete Vorsteuerventil entleert werden. In der geschlossenen Stellung liegt das Schließelement unter dem Einfluss des in dem Steuerraum herrschenden Drucks dichtend gegen den Ventilsitz an. Der Steuerraum wird auf der einen Seite über das Schließelement und auf der anderen Seite über eine Gehäusewand begrenzt. Das Schließelement liegt in der Offenstellung an der Gehäusewand an. Durch die Anlage an der Gehäusewand kann der Steuerraum in der Offenstellung vollständig entleert und das Medium durch das geöffnete Vorsteuerventil gespült werden.

Darüber hinaus ist die Form der Gehäusewand komplementär zu der Form des Schließelements ausgebildet. In der Offenstellung werden hierdurch Zwischenräume, in denen Medium verbleiben könnte, vermieden und eine vollständige Verdrängung des Mediums aus dem Steuerraum erreicht.

Weiterhin weist das Schließelement eine bewegbare Membrane mit einem sich beim Bewegen des Schließelements verformenden Rollbereich auf. Die Membrane kann über ein Verstärkungselement verstärkt sein. Die Membrane kann randseitig zwischen zwei Gehäuseteilen eingespannt und über den Rollbereich mit einem Mittelbereich verbunden sein. Im Mittelteil kann der Vorsteuerventilauslass des Vorsteuerventils sich zentral durch das Schließelement hindurch erstreckend angeordnet sein.

In diesem Zusammenhang ist es zur Vermeidung von Restmedium innerhalb des Steuerraums von Vorteil, dass die Gehäusewand eine Eintauchöffnung zur Aufnahme des Rollbereichs in der Offenstellung des Schließelements aufweist. Der Rollbereich kann in dieser Stellung in die Eintauchöffnung eintauchen, so dass die übrigen Bereiche und insbesondere der Mittelbereich der Membrane dicht an die darüber liegend angeordnete Gehäusewand angelegt werden können.

Darüber hinaus wird vorgeschlagen, dass das Vorsteuervolumen eine Vorsteuerventilkammer einschließt, in welcher ein Schließelement des Vorsteuerventils bewegbar angeordnet ist. Innerhalb der Vorsteuerventilkammer kann das Schließelement des Vorsteuerventils gegenüber dem Vorsteuerventilsitz auf und ab bewegt werden. Hierzu kann das Schließelement des Vorsteuerventils über einen mittels eines Spulensystems bewegbaren Plunger hin und her bewegt werden. Bei dem Plunger kann es sich um einen Magnetanker des Spulsystems handeln der durch Bestromung zwischen zwei stabilen Endlagen axial bewegbar ist. Insoweit kann es sich um ein bistabiles Magnetventil handeln.

Eine weitere vorteilhafte Ausgestaltung sieht vor, dass das Vorsteuervolumen einen Vorsteuerventileinlass und/oder einen Vorsteuerventilauslass einschließt. Durch Einschluss auch der Einlass- bzw. Auslassleitungen des Vorsteuerventils werden auch diese beim Öffnen des Hauptventilsitzes durch das verdrängte Medium durchspült.

Eine weitere Ausgestaltung sieht vor, dass die Vorsteuerventilkammer über ein Dichtelement gegenüber einem Plungerraum abgedichtet ist, in welchem ein das Schließelement bewegender Plunger bewegbar angeordnet ist. Es ergibt sich eine mediengetrennte Bauweise des Ventils, bei welcher das Spulensystem und der Plunger innerhalb des trockenen Bereichs des Ventils angeordnet ist. Hierdurch wird das von dem Medium durchströmte Volumen innerhalb des Vorsteuerventils und damit das Vorsteuervolumen als solches gering gehalten. Auch dies ist einem vollständigen Durchspülen zuträglich.

In diesem Zusammenhang ist ferner von Vorteil wenn das Schließelement an dem Dichtelement angeordnet ist. Das Schließelement kann Teil des Dichtelements sein, beispielsweise kann das Dichtelement von einer membranartigen Dichtung gebildet sein und das Dichtelement von deren mittlerem Abschnitt gebildet werden.

Darüber hinaus wird bei einem Verfahren der eingangs genannten Art zur **Lösung** der vorstehend genannten Aufgabe vorgeschlagen, dass durch die Verdrängung des Schließelements das in dem Vorsteuervolumen des Vorsteuerventils angeordnete Medium verdrängt wird. Auch hierbei ergeben sich die bereits im Zusammenhang mit dem Ventil erläuterten Vorteile.

In Weiterbildung des Verfahrens wird zudem vorgeschlagen, dass das Ventil nach einem oder mehreren der vorstehend erläuterten Merkmale ausgebildet ist.

Weitere Einzelheiten und Vorteile eines erfindungsgemäßen Ventils sowie des zugehörigen Verfahrens werden nachfolgend unter Zuhilfenahme der beigefügten Figuren eines Ausführungsbeispiels erläutert werden. Darin zeigen:
- Fig. 1: eine seitliche Schnittansicht eines erfindungsgemäßen Ventils in geschlossener Stellung und
- Fig. 2: eine seitliche Ansicht des Ventils gemäß der Darstellung in Fig. 1 in dessen geöffneter Stellung.

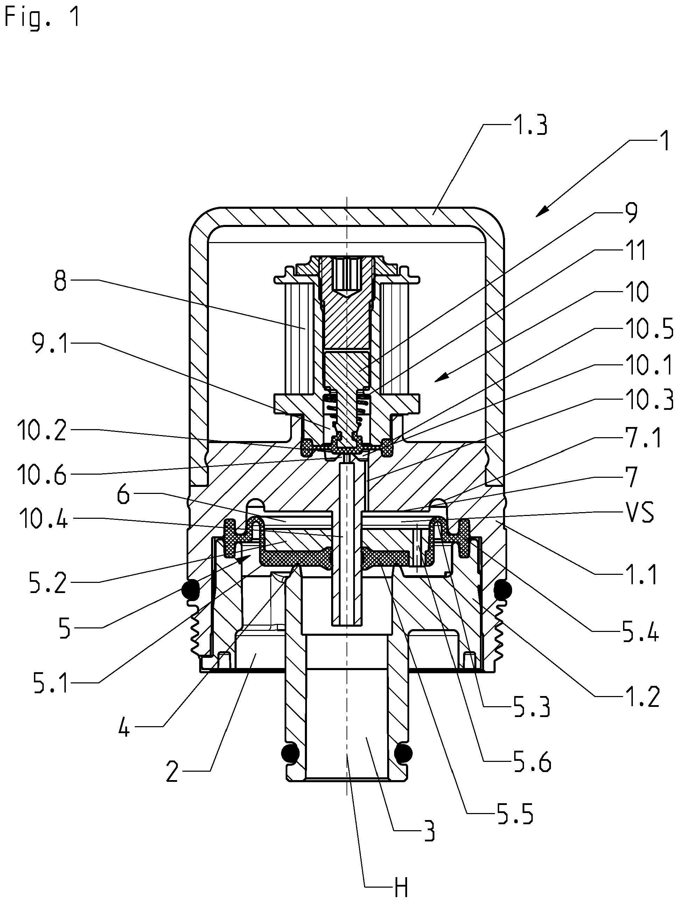

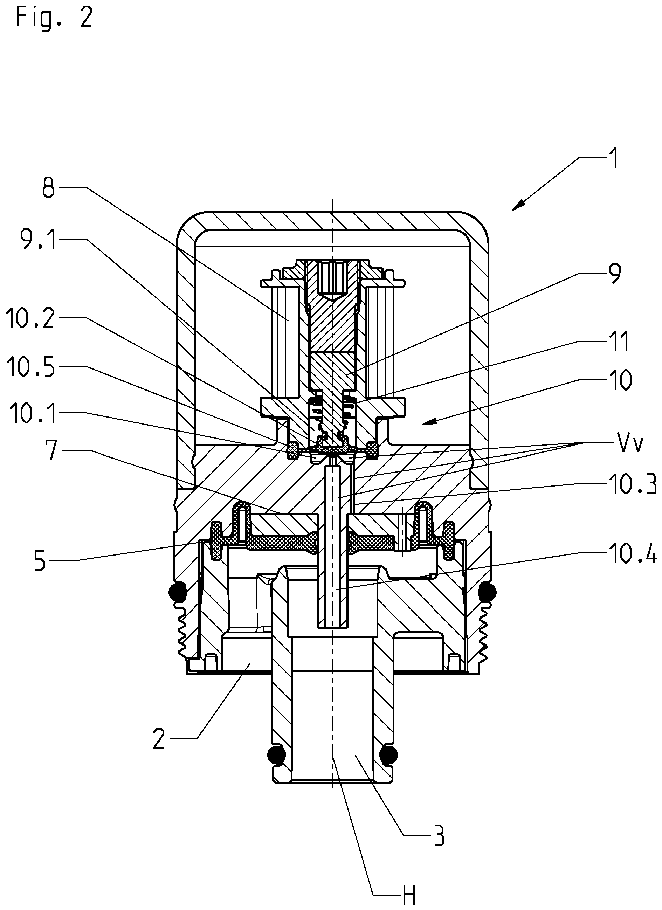

Die Figuren 1 und 2 zeigen ein als Kartuschenventil ausgebildetes Ventil 1, bei welchem es sich um ein eigenmediumbetätigtes Servoventil handelt.

Das Ventil 1 weist einen Ventileinlass 2 auf, der über einen ringzylindrischen Hauptventilsitz 4 mit einem Ventilauslass 3 strömungsverbunden ist. Der radial weiter außen liegende Ventileinlass 2 und der radial innen liegende Ventilauslass 3 sind koaxial zu einer Hauptachse H des Ventils 1 angeordnet.

In Fig. 1 ist das Ventil 1 in dessen Schließstellung dargestellt. In dieser Stellung ist der Hauptventilsitz 4 über ein Schließelement 5 abgedichtet und der Strömungsweg zwischen dem Ventileinlass 2 und dem Ventilauslass 3 unterbrochen. Das Schließelement 5 liegt von oben her auf dem Hauptventilsitz 4 auf. Bei dem Schließelement 5 handelt sich um eine rückseitig mit einem Verstärkungselement 5.2 versehene Membrane 5.1 aus einem gummielastischen Material. In deren Randbereich 5.4 ist die Membrane 5.1 zwischen zwei Gehäuseteilen 1.1, 1.2 des Ventils 1 unter Dichtwirkung eingeklemmt. Nach radial innen schließt sich an den Randbereich 5.4 der Membrane 5.1 ein Rollbereich 5.3 an. An den Rollbereich 5.3 schließt sich der Mittelbereich 5.5 der Membrane 5.1 an. Dieser Mittelbereich 5.5 ist rückseitig mit dem Verstärkungselement 5.2 verstärkt und in axialer Richtung gegenüber dem Hauptventilsitz 4 bewegbar angeordnet.

Über den Ventileinlass 2 tritt das Medium mit einem bestimmten Druck in das Innere des Ventils 1 ein. Über einen an dem Schließelement 5 vorgesehenen Steuerraumeinlass 5.6 kleineren Querschnitts tritt das Medium in einen oberhalb des Schließelements 5 angeordneten Steuerraum 6 ein. Der Steuerraum 6 ist auf der dem Ventilsitz 4 gegenüber liegenden Seite des Schließelements 5 angeordnet und befindet sich auf dem gleichen Druckniveau wie der Ventileinlass 2. Der Druck innerhalb des Ventileinlasses 2 und des Steuerraums 6 ist deutlich größer ist als jener des Ventilauslasses 3, welcher sich im Wesentlichen auf einem atmosphärischen Druckniveau befindet. Zudem sind die Flächen so gewählt, dass das Schließelement 5 unter dem Einfluss des zu schaltenden Mediums in der Schließstellung von oben her dichtend auf den Ventilsitz 4 gedrückt wird.

Zum Öffnen des Hauptventilsitzes 4 ist es erforderlich, das Schließelement 5 von dem Ventilsitz 4 anzuheben und auf diese Weise den Strömungsweg zwischen dem Ventileinlass 2 und dem Ventilauslass 3 freizugeben.

Hierzu werden die Druckverhältnisse innerhalb des Ventils 1 derart geändert, dass der Druck innerhalb des Steuerraums 6 abfällt. Aufgrund dieses Druckabfalls wird das Schließelement 5 unter dem Einfluss des über den Ventileinlass 2 von unten her anstehenden Drucks von dem Ventilsitz 4 abgehoben bis die in Fig. 2 dargestellte Offenstellung des Ventils 1 erreicht ist.

Die Änderung der Druckverhältnisse erfolgt durch Betätigung des im oberen Bereich des Ventils 1 unter einem deckelartigen Gehäuseteil 1.3 angeordneten Vorsteuerventils 10. Bei geschlossenem Vorsteuerventil 10 ist das Ventil 1 geschlossen. Durch Betätigung des Vorsteuerventils 10 lässt sich der Druck innerhalb des Steuerraums 6 absenken, wodurch das Schließelement 5 von dem Hauptventilsitz 4 abhebt.

Der Steuerraum 6 ist hierzu über einen Vorsteuerventileinlass 10.3 mit einer Vorsteuerventilkammer 10.1 des Vorsteuerventils 10 strömungsverbunden. Die Vorsteuerventilkammer 10.1 befindet sich daher auch auf dem gleichen Druckniveau wie der Steuerraum 6. Innerhalb der Vorsteuerventilkammer 10.1 ist ein Schließelement 10.2 des Vorsteuerventils 10 axial bewegbar gegenüber einem Vorsteuerventilsitz 10.6 angeordnet. Durch Anheben des Schließelements 10.2 von dem Vorsteuerventilsitz 10.6 wird der Vorsteuerventilauslass 10.4 in Richtung des unter dem Schließelement 5 angeordneten Ventilauslasses 3 geöffnet. Hierdurch fällt der Druck innerhalb des Steuerraums 6 ab und das Schließelement 5 hebt von der in Fig. 1 dargestellten Schließstellung in Richtung der in Fig. 2 dargestellten Offenstellung ab und das Ventil 1 wird geöffnet.

Beim Öffnen des Ventils 1 wird das oberhalb des Schließelements 5 in dem Steuerraum 6 zwischen dem Schließelement 5 und einer gegenüberliegenden Gehäusewand 7 des Gehäuseteils 1.1 eingeschlossene Medium über das geöffnete Vorsteuerventil 10 verdrängt. Dieses in der Schließstellung in dem Steuerraum 6 angeordnete Medium entspricht dem Verdrängungsvolumen V_{S} des Schließelements 5, vgl. Fig. 1. Das Vorsteuervolumen V_{V} des Vorsteuerventils 10 wird von sämtlichen durchströmten Volumina des Vorsteuerventileinlasses 10.3, der Vorsteuerventilkammer 10.1 und des Vorsteuerventilauslasses 10.4 gebildet, vgl. Fig. 2. Das Vorsteuervolumen V_{V} ist kleiner als das Verdrängungsvolumen V_{S} des Schließelements 10, weshalb die Verdrängung des Schließelements ausreicht, das Vorsteuervolumen V_{V} vollständig zu durchspülen. Hierdurch wird das zuvor innerhalb des Vorsteuervolumens V_{V} stehende Medium in Richtung des Ventilauslasses 3 verdrängt und gegen das aus dem Steuerraum 6 kommende Medium ersetzt. Es findet ein vollständiger Austausch des Mediums in dem Vorsteuervolumen V_{V} statt, wodurch sich eine deutlich verringerte Stagnationswasserbildung im Bereich des Vorsteuerventils 10 ergibt.

Wie bereits erwähnt, ist das Verdrängungsvolumen V_{S} des Schließelements 5 gegenüber dem strömungstechnisch nachgeschalteten Vorsteuervolumen V_{V} des Vorsteuerventils 10, welches sich im Wesentlichen aus dem Vorsteuerventileinlass 10.3, der Vorsteuerventilkammer 10.1 sowie dem Vorsteuerventilauslass 10.4 zusammensetzt, derart dimensioniert, dass das Vorsteuervolumen V_{V} durch das über das geöffnete Vorsteuerventil 10 verdrängte Medium bei jedem Öffnungsvorgang des Ventils 1 vollständig durchströmt wird. Hierdurch wird einer Stagnationswasserbildung vorgebeugt, da das Ventil 1 bei jedem Zapfvorgang vollständig mit Frischwasser durchspült wird. Beim Ausführungsbeispiel ist das Verdrängungsvolumen V_{S} in etwa gleich dem zehnfachen des Vorsteuervolumens V_{V} des Vorsteuerventils 10.

Das Verdrängungsvolumen V_{S} ist vollständig verdrängt, sobald das Schließelement 5 gemäß der Darstellung in Fig. 2 an der Gehäusewand 7 des Gehäuseteils 1.1 des Ventils 1 anliegt. Die Gehäusewand 7 ist komplementär zu der Form des Schließelements 5 ausgebildet, so dass dieses sich großflächig an die Gehäusewand 7 anlegen und das Medium vollständig aus dem Steuerraum 6 verdrängen kann. Hierzu ist an der Gehäusewand 7 randseitig eine Eintauchöffnung 7.1 vorgesehen, in welche der Rollbereich 5.3 der Membrane 5.1 passend eintreten kann, wie dies in Fig. 2 dargestellt ist.

Wie die Darstellungen in Fig. 1 und 2 dies weiter erkennen lassen, ist die Vorsteuerventilkammer 10.1 über ein membranartiges Dichtelement 10.5 gegenüber einem darüber liegenden Plungerraum 9.1 abgedichtet, in welchem ein Plunger 9 über das Spulensystem 8 zum Öffnen und Schließen des Vorsteuerventils 10 bewegbar angeordnet ist. Das den Vorsteuerventilsitz 10.6 verschließende bzw. öffnende Schließelement 10.2 wird gebildet von einem Mittelbereich des Dichtelements 10.5, der rückseitig mit dem über das Spulensystem 8 magnetbetätigten Plunger 9 formschlüssig verbunden ist. Durch Herauf- bzw. Herabbewegen des Plungers 9 kann daher der Vorsteuerventilsitz 10.6 geöffnet bzw. geschlossen werden. Die Anordnung des Plungers 9 ist dabei bistabil ausgeführt, weshalb dieser bei Bestromung im Zusammenspiel mit einer in Richtung der Schließstellung des Vorsteuerventils 1 vorgespannten Feder 11 zwei stabile Endlagen einnimmt. Alternativ zu der in den Figuren dargestellten Ausgestaltung mit einem bistabil angeordneten Plunger 9 kann die Erfindung aber auch gleichermaßen bei anders ausgebildeten Spulensystemen 8 angewendet werden, insbesondere auch bei solchen mit einem monostabil angeordneten Plunger 9.

Durch die Abdichtung des Plungerraums 9.1 gegenüber dem mediumdurchströmten Teil des Ventils 1 ergibt sich eine mediengetrennte Bauweise mit einem vergleichsweise kleinen und damit gut durchspülbaren, wenig Staupunkte aufweisenden Vorsteuervolumen V_{V}.

Durch die Abstimmung des Verdrängungsvolumens V_{S} des Schließelements 5 auf das Vorsteuervolumen V_{V} des Vorsteuerventils 10 kann einer Stagnationswasserbildung auf zuverlässige Art und Weise vorgebeugt werden. Dies ist insbesondere bei Trinkwasseranwendungen von hygienischem Vorteil.

### Bezugszeichen:

- 1: Ventil
- 1.1: Gehäuseteil
- 1.2: Gehäuseteil
- 1.3: Gehäuseteil
- 2: Ventileinlass
- 3: Ventilauslass
- 4: Hauptventilsitz
- 5: Schließelement
- 5.1: Membrane
- 5.2: Verstärkungselement
- 5.3: Rollbereich
- 5.4: Randbereich
- 5.5: Mittelbereich
- 5.6: Steuerraumeinlass
- 6: Steuerraum
- 7: Gehäusewand
- 7.1: Eintauchöffnung
- 8: Spulensystem
- 9: Plunger
- 9.1: Plungerraum
- 10: Vorsteuerventil
- 10.1: Vorsteuerventilkammer
- 10.2: Schließelement
- 10.3: Vorsteuerventileinlass
- 10.4: Vorsteuerventilauslass
- 10.5: Dichtelement
- 10.6: Vorsteuerventilsitz
- 11: Feder

- V_{S}: Verdrängungsvolumen
- V_{V}: Vorsteuervolumen
- H: Hauptachse

## Patentansprüche

1. Ventil, insbesondere Servoventil, zum Schalten eines Mediums mit einem zwischen einem Ventileinlass (2) und einem Ventilauslass (3) angeordneten Hauptventilsitz (4) und einem durch Betätigung eines Vorsteuerventils (10) zwischen einer Schließstellung und einer Offenstellung hin und her bewegbar angeordneten Schließelement (5), welches beim Öffnen des Vorsteuerventils (10) von dem Hauptventilsitz (4) abhebt und dabei Medium über das geöffnete Vorsteuerventil (10) verdrängt, wobei das Schließelement (5) eine bewegbare Membrane (5.1) mit einem sich beim Bewegen des Schließelements (5) verformenden Rollbereich (5.3) aufweist, wobei das Verdrängungsvolumen (V_{S}) des Schließelements (5) größer ist als das Vorsteuervolumen (V_{V}) des Vorsteuerventils (10), wobei das Verdrängungsvolumen (V_{S}) von einem in der Schließstellung des Schließelements (5) mit Medium gefüllten, vorsteuerventilseitig angeordneten Steuerraum (6) umschlossen wird, der auf der einen Seite über das Schließelement (5) und auf der anderen Seite über eine Gehäusewand (7) begrenzt wird, wobei die Gehäusewand (7) eine Eintauchöffnung (7.1) zur Aufnahme des Rollbereichs (5.3) in der Offenstellung des Schließelements (5) aufweist,
**dadurch gekennzeichnet,**
**dass** das Schließelement (5) in der Offenstellung an der Gehäusewand (7) anliegt und die Form der Gehäusewand (7) komplementär zu der Form des Schließelements (5) ausgebildet ist, so dass dieses sich großflächig an die Gehäusewand (7) anlegen und das Medium vollständig aus dem Steuerraum (6) verdrängen kann.

2. Ventil nach Anspruch 1, **dadurch gekennzeichnet, dass** das Verdrängungsvolumen (V_{S}) des Schließelements (5) gegenüber dem Vorsteuervolumen (V_{V}) derart dimensioniert ist, dass das Vorsteuervolumen (V_{V}) bei jedem Öffnungsvorgang vollständig durchspült wird.

3. Ventil nach Anspruch 1 oder 2, **dadurch gekennzeichnet, dass** das Verdrängungsvolumen (V_{S}) des Schließelements (5) um mehr als einen Faktor 2, vorteilhafter mehr als einen Faktor 5 und noch vorteilhafter mehr als einen Faktor 10, größer als das Vorsteuervolumen (V_{V}) des Vorsteuerventils (10) ist.

4. Ventil nach einem der vorhergehenden Ansprüche, **dadurch gekennzeichnet, dass** das Vorsteuervolumen (V_{V}) eine Vorsteuerventilkammer (10.1) einschließt, in welcher ein Schließelement (10.2) des Vorsteuerventils (10) bewegbar angeordnet ist.

5. Ventil nach einem der vorhergehenden Ansprüche, **dadurch gekennzeichnet, dass** das Vorsteuervolumen (V_{V}) einen Vorsteuerventileinlass (10.3) und/oder einen Vorsteuerventilauslass (10.4) einschließt.

6. Ventil nach einem der vorhergehenden Ansprüche, **dadurch gekennzeichnet, dass** die Vorsteuerventilkammer (10.1) über ein Dichtelement (10.5) gegenüber einem Plungerraum (9.1) abgedichtet ist, in welchem ein das Schließelement (10.2) bewegender Plunger (9) bewegbar angeordnet ist.

7. Ventil nach Anspruch 6, **dadurch gekennzeichnet, dass** das Schließelement (10.2) an dem Dichtelement (10.5) angeordnet ist.

8. Verfahren zum Schalten eines Mediums mittels eines Ventils (1), nach einer der Ansprüche 1 bis 7 mit einem zwischen einem Ventileinlass (2) und einem Ventilauslass (3) angeordneten Hauptventilsitz (4) und einem durch Betätigung eines Vorsteuerventils (10) zwischen einer Schließstellung und einer Offenstellung hin und her bewegbar angeordneten Schließelement (5), welches beim Öffnen des Vorsteuerventils (10) von dem Hauptventilsitz (4) abhebt und dabei Medium über das geöffnete Vorsteuerventil (10) verdrängt,
**dadurch gekennzeichnet,**
**dass** durch die Verdrängung des Schließelements (5) das in dem Vorsteuervolumen (V_{V}) des Vorsteuerventils (10) angeordnete Medium verdrängt wird.

9. Verfahren nach Anspruch 8, **dadurch gekennzeichnet, dass** das Ventil (1) nach einem der vorhergehenden Ansprüche ausgebildet ist.

10. Ventil nach einem der vorhergehenden Ansprüche, **dadurch gekennzeichnet, dass** der Vorsteuerventilauslass (10.4) des Vorsteuerventils (10) von einem durch das Schließelement (5) hindurch geführten Auslassstutzen gebildet wird.

## Claims

1. Valve, in particular servo valve, for controlling a medium, having a main valve seat (4) arranged between a valve inlet (2) and a valve outlet (3) and a closing element (5) which is arranged such that it can be moved to and fro between a closed position and an open position as a result of actuation of a pilot control valve (10) and which, when the pilot control valve (10) opens, lifts off from the main valve seat (4) and displaces medium via the opened pilot control valve (10), the closing element (5) having a movable diaphragm (5.1) with a rolling region (5.3) that deforms during the movement of the closing element (5), the displacement volume (V_{S}) of the closing element (5) being greater than the pilot control volume (V_{V}) of the pilot control valve (10), the displacement volume (V_{S}) being enclosed by a control chamber (6) which is arranged on the pilot control valve side and is filled with medium when the closing element (5) is in the closed position and which is bounded on one side by the closing element (5) and on the other side by a housing wall (7), the housing wall (7) having a plunge opening (7.1) to accommodate the rolling region (5.3) in the open position of the closing element (5),
**characterized in that**
the closing element (5) bears on the housing wall (7) when in the open position, and the shape of the housing wall (7) is designed to be complementary to the shape of the closing element (5), so that the latter bears on the housing wall (7) over a large area and can displace the medium completely out of the control chamber (6).

2. Valve according to Claim 1, **characterized in that** the displacement volume (V_{S}) of the closing element (5) is dimensioned with respect to the pilot control volume (V_{V}) in such a way that the pilot control volume (V_{V}) is flushed through completely during each opening operation.

3. Valve according to Claim 1 or 2, **characterized in that** the displacement volume (V_{S}) of the closing element (5) is greater by more than a factor 2, advantageously more than a factor 5 and still more advantageously more than a factor 10, than the pilot control volume (V_{V}) of the pilot control valve (10).

4. Valve according to one of the preceding claims, **characterized in that** the pilot control volume (V_{V}) encloses a pilot control valve chamber (10.1), in which a closing element (10.2) of the pilot control valve (10) is arranged such that it can move.

5. Valve according to one of the preceding claims, **characterized in that** the pilot control volume (V_{V}) encloses a pilot control valve inlet (10.3) and/or a pilot control valve outlet (10.4).

6. Valve according to one of the preceding claims, **characterized in that** the pilot control valve chamber (10.1) is sealed off by a seal element (10.5) with respect to a plunger chamber (9.1), in which a plunger (9) that moves the closing element (10.2) is arranged such that it can move.

7. Valve according to Claim 6, **characterized in that** the closing element (10.2) is arranged on the seal element (10.5).

8. Method for controlling a medium by means of a valve (1) according to one of Claims 1 to 7 having a main valve seat (4) arranged between a valve inlet (2) and a valve outlet (3) and a closing element (5) which is arranged such that it can be moved to and fro between a closed position and an open position as a result of actuation of a pilot control valve (10) and which, when the pilot control valve (10) opens, lifts off from the main valve seat (4) and displaces medium via the opened pilot control valve (10),
**characterized in that**
as a result of the displacement of the closing element (5), the medium arranged in the pilot control volume (V_{V}) of the pilot control valve (10) is displaced.

9. Method according to Claim 8, **characterized in that** the valve (1) is constructed in accordance with one of the preceding claims.

10. Valve according to one of the preceding claims, **characterized in that** the pilot control valve outlet (10.4) of the pilot control valve (10) is formed by an outlet stub led through the closing element (5).

## Revendications

1. Soupape, notamment servo-soupape, pour mettre en circuit un milieu avec un siège de soupape principal (4) disposé entre une entrée de soupape (2) et une sortie de soupape (3) et un élément de fermeture (5) disposé pouvant bouger en va-et-vient par actionnement d'une soupape pilote (10) entre une position de fermeture et une position d'ouverture, lequel se soulève du siège de soupape principale (4) à l'ouverture de la soupape pilote (10) et déplace à cet effet un milieu par le biais de la soupape pilote ouverte (10), l'élément de fermeture (5) comportant une membrane mobile (5.1) avec une zone de déroulement (5.3) se déformant lors du déplacement de l'élément de fermeture (5), le volume de déplacement (Vₛ) de l'élément de fermeture (5) étant plus grand que le volume pilote (Vᵥ) de la soupape pilote (10), le volume de déplacement (Vₛ) étant entouré par un espace de contrôle (6) disposé côté soupape pilote, rempli d'un milieu dans la position de fermeture de l'élément de fermeture (5), qui est limité d'un côté par l'élément de fermeture (5) et de l'autre côté par une paroi de boîtier (7), la paroi de boîtier (7) comportant une ouverture d'immersion (7.1) pour recevoir la zone de déroulement (5.3) dans la position d'ouverture de l'élément de fermeture (5), **caractérisée en ce que** l'élément de fermeture (5) s'applique dans la position d'ouverture à la paroi de boîtier (7) et la forme de la paroi de boîtier (7) est constituée de façon complémentaire à la forme de l'élément de fermeture (5) de telle sorte que celui-ci vient en contact sur une grande surface sur la paroi de boîtier (7) et peut repousser complètement le milieu hors de l'espace de contrôle (6).

2. Soupape selon la revendication 1, **caractérisée en ce que** le volume de déplacement (Vₛ) de l'élément de fermeture (5) est dimensionné par rapport au volume pilote (Vᵥ) de telle sorte que le volume pilote (Vᵥ) est complètement purgé à chaque opération d'ouverture.

3. Soupape selon la revendication 1 ou 2, **caractérisée en ce que** le volume de déplacement (Vₛ) de l'élément de fermeture (5) est plus grand d'un facteur de plus de 2, plus avantageusement d'un facteur de plus de 5 et encore plus avantageusement d'un facteur de plus de 10, que le volume pilote (Vᵥ) de la soupape pilote (10).

4. Soupape selon l'une quelconque des revendications précédentes, **caractérisée en ce que** le volume pilote (Vᵥ) comprend une chambre de soupape pilote (10.1) dans laquelle est disposé mobile un élément de fermeture (10.2) de la soupape pilote (10).

5. Soupape selon l'une quelconque des revendications précédentes, **caractérisée en ce que** le volume pilote (Vᵥ) comprend une entrée de soupape pilote (10.3) et/ou une sortie de soupape pilote (10.4).

6. Soupape selon l'une quelconque des revendications précédentes, **caractérisée en ce que** la chambre de soupape pilote (10.1) est étanchéifiée par un élément d'étanchéification (10.5) par rapport à un espace de piston plongeur (9.1) dans lequel est disposé mobile un piston plongeur (9) déplaçant l'élément de fermeture (10.2).

7. Soupape selon la revendication 6, **caractérisée en ce que** l'élément de fermeture (10.2) est disposé sur l'élément d'étanchéification (10.5).

8. Procédé de mise en circuit d'un milieu au moyen d'une soupape (1) selon l'une quelconque des revendications 1 à 7 avec un siège de soupape principale (4) disposé entre une entrée de soupape (2) et une sortie de soupape (3) et un élément de fermeture (5) disposé pouvant bouger en va-et-vient par actionnement d'une soupape pilote (10) entre une position de fermeture et une position d'ouverture, lequel se soulève du siège de soupape principal (4) à l'ouverture de la soupape pilote (10) et déplace à cet effet un milieu par le biais de la soupape pilote ouverte (10), **caractérisé en ce que** le milieu disposé dans le volume pilote (Vᵥ) de la soupape pilote (10) est déplacé par le déplacement de l'élément de fermeture (5).

9. Procédé selon la revendication 8, **caractérisé en ce que** la soupape (1) est constituée selon l'une quelconque des revendications précédentes.

10. Soupape selon l'une quelconque des revendications précédentes, **caractérisée en ce que** la sortie de soupape pilote (10.4) de la soupape pilote (10) est formée par une tubulure de sortie passée à travers l'élément de fermeture (5).
